# FASCICULE DE BREVET EUROPEEN

(11) **EP 1 958 132 B1**
(45) Date de publication et mention de la délivrance du brevet: **29.07.2009**
(21) Numéro de dépôt: 06831327.9
(22) Date de dépôt: 14.11.2006
(51) Int. Cl.: G06K 19/077, G06F 21/00

(54) **CARTE A MICROPROCESSEUR ET/OU MEMOIRE POURVUE D'UN AFFICHAGE**
MIT EINEM DISPLAY AUSGESTATTETER MIKROPROZESSOR UND/ODER SPEICHERKARTE
MICROPROCESSOR AND/OR MEMORY CARD PROVIDED WITH A DISPLAY

(30) Priorité: 14.11.2005 FR 0553456
(43) Date de publication de la demande: 20.08.2008
(73) Titulaire: Innovative Card Technologies, Inc., Los Angeles, CA 90024 (US)
(72) Inventeur: GUILLAUD, Philippe, Los Angeles, CA 90036 (US); LALO, Cyril, Los Angeles, CA 90036 (US)
(74) Mandataire: Lebrette, Camille
(86) Numéro de dépôt international: PCT/FR2006/051164
(87) Numéro de publication internationale: WO 2007/057603

(56) Documents cités:
- EP-A- 1 004 980
- DE-U1- 20 115 122
- US-A- 4 800 590
- US-A- 5 361 062

## Description

La présente invention concerne une carte à microprocesseur et/ou à mémoire, notamment une carte de paiement de format normalisé.

De telles cartes, notamment celles conformes à la norme ISO 7810 et/ou 7816, sont en général utilisées en interface avec des appareils destinés à effectuer des opérations nécessitant une identification de l'utilisateur. Cette identification est classiquement réalisée par une mise en relation, avec ou sans contact, de la carte avec un appareil. La carte est alors soumise à des signaux électriques ou magnétiques de manière que soient lues des données présentes sur la carte. La lecture de ces données permet notamment l'identification de l'utilisateur.

De telles cartes incluent généralement plusieurs éléments d'identification permettant une lecture de données présentes sur la carte. Ces éléments d'identification sont notamment un numéro inscrit sur la carte, une piste magnétique, un composant semi-conducteur ou « puce » incluant des données relatives à un code secret. Dans le cas de l'usage d'un composant semi-conducteur, des signaux pénètrent dans la carte et le composant fournit une réponse. Ces cartes, qui ne possèdent pas d'alimentation propre, fonctionnent seulement avec l'appareil destiné à effectuer des opérations et sont passives en l'absence d'un tel appareil.

Le point faible de telles cartes utilisées pour l'identification est que, du fait de leur passivité, elles peuvent être interrogées de manière à découvrir les données qui y sont stockées. Ainsi, ces cartes peuvent être utilisées frauduleusement, par exemple en envoyant diverses questions sous la forme de flux électriques ou magnétiques vers le composant semi-conducteur. Ces flux sont analysés par le composant et une réponse est fournie. En fonction des réponses de la puce, il est alors possible de savoir ce que la puce contient, notamment un code secret. Dans la situation actuelle, l'usage d'un code secret, bien que sécurisant pour l'utilisateur, ne constitue pas une garantie suffisante contre la fraude.

Les possibilités de fraude nuisent à la confiance des utilisateurs en de telles cartes et donc à leur expansion, notamment pour des opérations de paiement.

Pour accroître la sécurité de telles cartes de paiement, il est connu d'utiliser une carte munie d'un clavier permettant de saisir un code secret pour activer la carte.

Cependant, disposer un clavier sur une telle carte implique une contrainte sévère quant à la taille de ce clavier, si l'on veut rendre la carte compatible avec les normes sur le format des cartes de paiement. En effet les zones dites libres selon ces normes sont peu nombreuses, et leur surface réduite.

En particulier, l'épaisseur de la carte empêche de réaliser des touches sensitives, aptes à informer l'utilisateur qu'il a correctement actionné une touche du clavier.

Pour pallier cet inconvénient l'invention prévoit d'utiliser un afficheur alimenté par un générateur électrique, tel qu'une pile, alimentant aussi la mémoire et/ou le microprocesseur.

Il faut tenir compte du fait que la pile doit avoir une durée de vie correspondant à celle de la carte, par exemple entre deux et trois ans. Or l'afficheur, par exemple à cristaux liquides, est très consommateur d'énergie électrique. L'invention prévoit donc des moyens pour minimiser la consommation de l'afficheur.

US-A-4 800 590 divulgue déjà une carte à mémoire et à microprocesseur avec une pluralité de touches destinées à introduire un code personnel. Ce code personnel est stocké dans une mémoire de la carte. Cette carte comprend en plus un afficheur, un module d'émission acoustique, un générateur d'énergie électrique et des moyens pour que l'affichage ne soit activé que si un code a été introduit par l'utilisateur.

L'invention propose donc un moyen de renseigner l'utilisateur sur le processus de saisie en cours sans utiliser l'afficheur, qui consomme beaucoup d'énergie.

Ainsi, l'invention concerne une carte à mémoire ou à microprocesseur, comprenant :
- une pluralité de touches destinées à introduire un code personnel du possesseur/utilisateur de la carte, ce code personnel étant stocké dans une mémoire de la carte,
- un afficheur pour l'affichage d'une information,
- un module d'émission acoustique, émettant un signal sonore audible lorsqu'une touche est correctement actionnée,
- un générateur d'énergie électrique pour l'alimentation de l'afficheur, du module d'émission acoustique et de la mémoire et/ou du microprocesseur, et
- des moyens pour que l'affichage ne soit activé que si le code saisi par l'utilisateur est identique au code stocké dans la carte.

Ainsi, une carte selon l'invention est équipée d'un module d'émission sonore, ou « buzzer », qui permet l'émission de signaux sonores, et notamment de signaux sonores significatifs de l'appui sur une touche, ce qui permet de réserver l'afficheur pour l'affichage d'informations indispensables, celui-ci étant beaucoup plus consommateur d'énergie qu'un buzzer conventionnel. Ainsi, on réalise le fonctionnement voulu de la carte tout en maximisant la durée de vie de la batterie intégrée. Selon l'invention, l'afficheur de la carte n'est activé que si l'utilisateur a saisi de manière correcte un code secret personnel. Ainsi, l'afficheur n'est pas activé sur simple appui d'une touche « ON/OFF » ayant fonction d'interrupteur comme sur certaines carte connues, ou sur simple saisie d'une combinaison facile, voire évidente, comme par exemple sur un téléphone mobile. Grâce à cette caractéristique, on minimise de manière drastique le temps d'allumage de l'afficheur puisque les conditions devant être vérifiées pour que la carte autorise l'activation de l'afficheur sont plus sévères. L'économie d'énergie est donc maximale.

Dans une réalisation, le code personnel de l'utilisateur est une séquence de plusieurs caractères.

Dans une réalisation, la carte comprend des moyens pour fournir un mot de passe dynamique sur l'afficheur après la saisie correcte du code. Ce mot de passe peut alors être entré sur un clavier d'un appareil pour l'authentification du porteur de la carte.

Dans une réalisation, le module d'émission comporte des moyens pour émettre un signal sonore représentatif d'un mot de passe dynamique.

Dans une réalisation, la carte comporte des moyens pour qu'un même mot de passe dynamique soit simultanément présenté sur l'afficheur et émis sous la forme d'un signal sonore par le module d'émission sonore.

Ainsi, la carte peut être utilisée de façon classique par la transmission de signaux électriques vers un serveur. Autrement dit, la carte permet l'authentification, d'une part, à l'aide du clavier qui permet l'émission de signaux électriques, et, d'autre part, à l'aide de signaux sonores lorsque l'appareil avec lequel la carte est utilisée dispose d'un microphone transformant les signaux acoustiques en signaux électriques.

Ces deux moyens de transmission d'un mot de passe dynamique permettent de répondre au problème posé par les multiples canaux d'authentification qui peuvent être utilisés par un prestataire de services pour identifier un utilisateur (téléphone, Internet, objets portables tel qu'un assistant personnel...).

Lorsque la carte émet un signal sonore représentant un mot de passe dynamique sonore, celui-ci doit être capté par un microphone, transformé en signaux électriques qui sont ensuite transmis. Dans le cas d'une authentification via un ordinateur personnel connecté à un réseau de type Internet, cette solution présente l'inconvénient de nécessiter l'installation d'un programme dédié à la capture, à la conversion et à la transmission du signal sonore émis par la carte. Pour éviter cet inconvénient, on prévoit d'utiliser le mot de passe dynamique tel que présenté sur l'afficheur. L'utilisateur est alors invité à rentrer avec son clavier ce mot de passe ainsi que son identifiant (par exemple un numéro inscrit sur sa carte) dans des champs dédiés, par exemple sur le site Internet auprès duquel il doit s'identifier.

Dans une réalisation, le module d'émission comporte des moyens pour émettre un deuxième signal sonore audible caractéristique, lorsque l'information requise (i.e. le code personnel) a été correctement entrée.

Dans une réalisation, la carte comporte une touche d'activation de la carte sur la face opposée à celle où sont disposés le clavier et l'afficheur.

Dans une réalisation, la carte est conforme aux normes ISO 7810 et/ou ISO 7816.

Dans une réalisation, les touches sont pratiquement dans le même plan que la face de la carte sur laquelle elles sont disposées.

Dans une réalisation, le buzzer est un élément de type piézoélectrique utilisant la carte comme membrane vibrante, le buzzer mettant la carte en vibration pour la transformer en source émettrice de signaux acoustiques.

Un exemple de réalisation de l'invention est décrit de manière non limitative en relation avec les figures dans lesquelles :
- la figure 1 représente une carte selon l'invention vue de face,
- la figure 2 montre des composants d'une carte selon l'invention,
- la figure 3 représente une carte selon l'invention vue de dos.

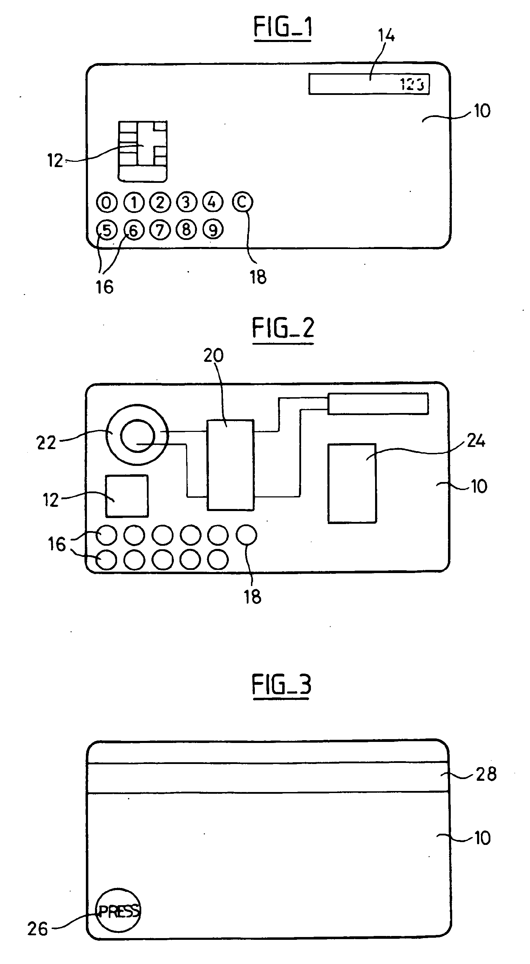

La figure 1 montre une carte 10, pourvue d'un composant semi-conducteur 12 et d'un afficheur 14, situé dans l'angle supérieur droit de la carte, le long de l'arête supérieure de la carte. Le composant 12, dans cet exemple, est utilisé pour effectuer des transactions sécurisées telles que celles effectuées avec des distributeurs automatiques de billets. Cet afficheur 14 est flexible pour satisfaire la caractéristique de flexibilité des cartes de paiement. Celui-ci peut afficher une séquence comprenant jusqu'à huit caractères ou chiffres. Le long de l'arête inférieure de la carte 10, et contre le bord gauche de celle-ci est disposé un clavier numérique, composé de touches 16. Ces touches sont disposées selon deux rangées parallèles de cinq touches chacune, l'ensemble des touches 16 étant associé aux dix chiffres allant de 0 à 9. A proximité de ces dix touches 16, une touche 18, associée dans l'exemple à la lettre 'C', offre une fonction supplémentaire, par exemple une fonction de correction, à savoir l'annulation de la dernière saisie.

La figure 2 montre les composants intégrés à la carte 10. Une pile 20 permet d'alimenter les différents composants de la carte 10. Un module d'émission sonore 22, ou « buzzer », est intégré à la carte 10. Il s'agit d'un haut-parleur de type piézoélectrique. Un microprocesseur 24 permet d'effectuer un certain nombre d'opérations, parmi lesquelles le calcul d'un mot de passe dynamique, ou OTP (« One Time Password »). Ce mot de passe dynamique est destiné à être affiché par l'afficheur 14 et/ou émis par le buzzer 22 sous forme de signaux sonores représentatifs de ce mot de passe dynamique. De préférence, les signaux émis et affichés comprennent un identifiant propre à la carte, l'OTP, et un numéro incrémenté à chaque calcul d'un OTP par le microprocesseur.

La figure 3 montre le dos de la carte 10. Celle-ci comprend une piste magnétique 28 ainsi qu'une touche 26 destinée à activer la carte 10, notamment pour le calcul d'un OTP.

Une telle carte permet de réaliser une authentification sûre et fiable de son détenteur, reposant sur l'utilisation de deux facteurs : un code Pin connu seulement du possesseur de la carte, et un mot de passe dynamique fourni par la carte.

Un deuxième but d'une carte selon l'invention est de pouvoir réaliser une telle authentification au travers de tous les canaux de communication existants (téléphone, Internet...) ou directement sur un appareil (automate, ordinateur portable...). Ainsi, la présence du buzzer ou vibreur 22 et de l'afficheur 14 offre plusieurs solutions à l'utilisateur pour réaliser son authentification : le mot de passe peut être transmis de manière acoustique, ou entré grâce à un clavier par l'utilisateur qui peut lire l'OTP sur l'afficheur 14. Ainsi, la carte est d'utilisation universelle.

Le mot de passe est généré via un algorithme par le microprocesseur 24, et basé sur une clé originale unique non stockée « en clair » dans la carte (i.e. la clé est une donnée présente sur la carte, mais de manière modifiée, encryptée, donc non lisible). Cette même clé est par ailleurs stockée dans une base de données d'un serveur (non montré) chargé de l'authentification, ce qui permet la synchronisation du mot de passe dynamique. Ainsi, le serveur chargé de l'authentification et le microprocesseur utilise le même algorithme de calcul, basé sur la même clé, permettant au serveur de comparer le mot de passe dynamique qu'il a lui-même généré à celui fourni par la carte d'un utilisateur. Lorsque les deux OTP sont identiques, le porteur de la carte est authentifié.

Le code PIN est un code secret personnel : il est connu du seul détenteur de la carte, ce code étant modifiable par l'utilisateur. Ce code est une séquence de plusieurs caractères (signes, chiffres ou lettres), et nécessite donc d'appuyer sur une combinaison de touches. Dans l'exemple, le code personnel du porteur de la carte est un code à 4 chiffres. Le code PIN est stocké dans une mémoire de la carte 10, par exemple une mémoire du microprocesseur 24, et le microprocesseur 24 comporte des moyens pour comparer le code saisi par l'utilisateur au code stocké en mémoire. Si le code saisi et le code stocké sont identiques, alors la carte est activée, et elle peut activer l'afficheur 14 afin de délivrer des informations à l'utilisateur, notamment une séquence de caractères représentant un mot de passe dynamique. Si le code saisi est incorrect, la carte n'est pas activée, et l'afficheur reste éteint.

Deux modes de saisie du code sont possibles. Dans un premier mode, l'utilisateur saisit son code personnel puis actionne une touche de validation, comportant par exemple le symbole « OK » (cette touche pouvant être par exemple la touche 18 ou une touche supplémentaire non représentée). Lorsque la carte reçoit le signal correspondant à l'actionnement de la touche de validation, le microprocesseur compare alors le code saisi au code stocké. Dans ce mode de fonctionnement, le code personnel peut être une séquence de caractères de longueur variable.

Dans un deuxième mode, le code personnel est de longueur déterminée, par exemple 4 caractères, et la carte 10 est activée dès que la bonne séquence de caractères a été entrée.

On définit plusieurs stratégies pour l'utilisation couplée du code PIN et de l'OTP :
- Première possibilité : l'utilisateur entre son code PIN, et si celui-ci est correct, un OTP est calculé et délivré par le microprocesseur 24, via le buzzer 22 et l'afficheur 14.
- Deuxième possibilité : l'utilisateur saisit son code PIN, ce dernier étant utilisé dans le calcul de l'OTP, ce qui implique que la saisie d'un code incorrect aura pour conséquence le calcul d'un OTP invalide.
- Troisième possibilité : il n'est pas nécessaire de saisir le code PIN pour obtenir un OTP. On utilise alors la touche 26 située au dos de la carte, qui délivre alors un OTP. Le code PIN reste dans ce cas un deuxième moyen d'authentification, mais celui-ci doit être fourni de la même manière que l'OTP au serveur chargé de l'authentification. Le code PIN doit donc être stocké dans le serveur réalisant l'authentification.

Dans tous les cas où le code PIN est entré sur la carte elle-même, l'afficheur sera désactivé pendant la saisie. L'utilisateur est renseigné sur le déroulement du processus de saisie grâce au buzzer 22, beaucoup plus économe en énergie qu'un afficheur. A chaque appui sur une touche, un signal caractéristique, tel qu'un « bip » sonore, est émis par le buzzer. Ce fonctionnement permet d'optimiser la durée de vie de la pile 20, et donc de la carte 10. Le buzzer peut également émettre un deuxième signal sonore caractéristique, différent du premier, et informant l'utilisateur qu'il a saisi un code correct.

On décrit ci-après différents exemples de procédures d'authentification réalisables avec une carte selon l'invention, lorsqu'un utilisateur doit s'identifier auprès d'un prestataire de services.

Authentification via un réseau téléphonique : dans ce cas, il n'est pas souhaitable que le code PIN de l'utilisateur transite à travers le réseau car il peut être « entendu ». On utilise donc une carte activée par le code PIN. L'utilisateur saisit son code, la carte délivre un OTP acoustique, l'utilisateur ayant préalablement positionnée sa carte à proximité du microphone du téléphone. Les signaux acoustiques sont transmis à travers le réseau téléphonique vers un serveur du prestataire concerné. Ces signaux sont alors décodés, l'identifiant est reconnu, et l'OTP est vérifié. La transaction est alors acceptée ou refusée.

Authentification via le réseau Internet : l'utilisateur est ici amené à entrer son identifiant et son OTP. Il recopie donc l'OTP tel qu'affiché par l'afficheur 14. Pour obtenir cet OTP, l'utilisateur a préalablement entré son code PIN pour activer la carte. Son identifiant et son OTP sont entrés sur un clavier d'un ordinateur connecté à un site Internet du prestataire. La solution utilisant un code PIN sur la carte elle-même est plus sûre comparée à une carte dépourvue d'un clavier dans la mesure où le code PIN n'a pas besoin d'être stocké chez le prestataire.

Dans une variante non représentée, la carte est conforme aux normes internationales concernant les cartes de paiement, et notamment les normes ISO 7810 et/ou 7816. Dans cette configuration l'implantation des différents composants, et principalement du clavier doit être effectuée aux emplacements laissés libres par la norme, et ne pas empiéter sur les emplacements réservés à l'embossage de la carte. Il est envisageable, dans ce cas, de réaliser un clavier sur une rangée unique de touches, éventuellement de plus petite taille, et/ou comportant un nombre plus limité de touches.

En variante encore, on ne prévoit pas de clavier, et on prévoit uniquement la touche au dos de la carte permettant son activation. Elle conserve dans ce cas le buzzer, dont la seule fonction est d'émettre les signaux caractéristiques de l'OTP généré consécutivement à l'actionnement de la touche d'activation. Une telle carte peut être associée à un code PIN propre à l'utilisateur. Dans ce cas, celui-ci doit être fourni au prestataire lors de l'authentification. Par exemple ce code est entré sur le site Internet du prestataire et comparé avec le code stocké dans le système informatique du prestataire.

Selon encore une autre variante (non montrée), le microprocesseur 24 (figure 2) fait partie du composant 12. Dans ce cas, le composant 12 est par exemple un composant standardisé selon la norme EMV.

## Revendications

1. Carte (10) à mémoire et/ou à microprocesseur (24), comprenant :
- une pluralité de touches (16) destinées à introduire un code personnel du possesseur/utilisateur de la carte, ce code personnel étant stocké dans une mémoire de la carte,
- un afficheur (14) pour l'affichage d'une information,
- un module d'émission acoustique (22), émettant un signal sonore audible caractéristique lorsqu'une touche est correctement actionnée,
- un générateur d'énergie électrique (20) pour l'alimentation de l'afficheur (14), du module d'émission acoustique (22) et de la mémoire et/ou du microprocesseur (24), et
- des moyens pour que l'affichage ne soit activé que si le code saisi par l'utilisateur est identique au code stocké dans la carte.

2. Carte selon la revendication 1, dans laquelle le code personnel de l'utilisateur est une séquence de plusieurs caractères.

3. Carte selon la revendication 1 ou 2, comprenant des moyens pour fournir un mot de passe dynamique présenté sur l'afficheur.

4. Carte selon l'une des revendications 1 à 3, dans laquelle le module d'émission comporte des moyens pour émettre un signal sonore représentatif d'un mot de passe dynamique.

5. carte selon la revendication 4, comportant des moyens pour qu'un même mot de passe dynamique soit simultanément présenté sur l'afficheur et émis sous la forme d'un signal sonore par le module d'émission sonore.

6. carte selon l'une des revendications 1 à 5, dans laquelle le module d'émission comporte des moyens pour émettre un deuxième signal sonore audible caractéristique, lorsque l'information requise a été correctement entrée.

7. Carte selon l'une des revendications précédentes comportant une touche d'activation (26) de la carte sur la face opposée à celle ou sont disposés le clavier et l'afficheur.

8. Carte selon l'une des revendications précédentes, conforme aux normes ISO 7810 et/ou ISO 7816.

9. carte selon l'une des revendications précédentes, dans laquelle les touches sont pratiquement dans le même plan que la face de la carte sur laquelle elles sont disposées.

10. Carte selon l'une des revendications précédentes, dans laquelle le buzzer est un élément de type piézoélectrique utilisant la carte comme membrane vibrante, le buzzer mettant la carte en vibration pour la transformer en source émettrice de signaux acoustiques.

## Claims

1. Memory and/or microprocessor (24) card (10) comprising:
- a plurality of touch-keys (16) designed to introduce a personal code of the possessor/user of the card, this personal code being stored in a memory of the card,
- a display unit (14) for displaying a piece of information,
- an acoustic emission module (22) emitting a characteristic audible sound signal when a touch-key is correctly actuated,
- an electrical energy generator (20) for the power supply to the display unit (14), the acoustic emission module (22) and the memory and/or the microprocessor, and
- means so that the display is activated only if the code entered by the user is identical to the code stored in the card.

2. Card according to claim 1, wherein the user's personal code is a sequence of several characters.

3. Card according to claim 1 or 2, comprising means to provide a one-time password presented on the display unit

4. Card according to one of the claims 1 to 3, wherein the emission module comprises means to emit a sound signal representing a one-time password.

5. Card according to claim 4, comprising means so that one and the same one-time password is simultaneously present on the display unit and emitted in the form of a sound signal by the sound emission module

6. Card according to one of the claims 1 to 5, wherein the emission module comprises means to emit a second characteristic audible sound signal when the information required has been correctly entered.

7. Card according to one of the above claims comprising a touch-key (26) for activating the card on the side opposite the one on which the keypad and the display unit are placed

8. Card according to one of the above claims, compliant with the ISO 7810 and/or ISO 7816 standards.

9. Card according to one of the above claims, wherein the touch-keys are practically in the same plane as the face of the card on which they are laid out

10. Card according to one of the above claims, wherein the buzzer is a piezoelectric type element using a card such as a vibrating membrane, the buzzer putting the card into vibration to convert it into a source that is an emitter of acoustic signals

## Patentansprüche

1. Speicherkarte (10)- und/oder Mikroprozessorkarte (24) mit:
- einer Vielzahl an Tasten (16), die dazu bestimmt sind, einen Geheimcode des Besitzers/ Benutzers der Karte einzugeben, wobei dieser Geheimcode in einem Speicher der Karte abgelegt ist,
- einer Anzeige (14) zum Anzeigen einer Information,
- einem akustischen Sendemodul (22), das ein hörbares und kennzeichnendes Schallsignal aussendet, wenn eine Taste korrekt betätigt wurde,
- einem Stromgenerator (20) zur Versorgung der Anzeige (14), des akustischen Sendemoduls (22) und des Speichers und/ oder des Mikroprozessors (24), und
- Mitteln, die dafür sorgen, dass die Anzeige nur dann aktiv ist, wenn der vom Benutzer eingegebene Code jenem Code entspricht, der in der Karte abgelegt ist.

2. Karte nach Anspruch 1, bei der der Geheimcode des Benutzers eine Folge von mehreren Zeichen ist.

3. Karte nach Anspruch 1 oder 2, mit Mitteln zur Beistellung eines dynamischen Passworts, das auf der Anzeige aufscheint.

4. Karte nach einem der Ansprüche 1 bis 3, bei der das Sendemodul Mittel zum Senden eines Schallsignals enthält, das einem dynamischen Passwort entspricht.

5. Karte nach Anspruch 4, die Mittel enthält, wonach ein und dasselbe dynamische Passwort gleichzeitig an der Anzeige aufscheint und vom akustischen Sendemodul in Form eines Schallsignals ausgesendet wird.

6. Karte nach einem der Ansprüche 1 bis 5, bei der das Sendemodul Mittel zum Senden eines zweiten hörbaren und kennzeichnenden Schallsignals enthält, wenn die nötige Information korrekt eingegeben worden ist.

7. Karte nach einem der vorherigen Ansprüche mit einer Aktivierungstaste (26) für die Karte auf der Seite, die jener gegenüber liegt, auf der die Tastatur und die Anzeige angebracht sind.

8. Karte nach einem der vorherigen Ansprüche, die den Normen ISO 7810 und/oder ISO 7816 entspricht.

9. Karte nach einem der vorherigen Ansprüche, bei der sich die Tasten praktisch auf derselben Ebene befinden, wie die Vorderseite der Karte, auf der sie angeordnet sind.

10. Karte nach einem der vorherigen Ansprüche, bei der der Buzzer ein piezoelektrisches Bauteil ist, das die Karte als vibrierende Membran verwendet, wobei der Buzzer die Karte zum Vibrieren bringt, um sie zu einer Sendequelle für Schallsignale umzuformen.
